# EUROPEAN PATENT SPECIFICATION

(11) **EP 3 316 232 B1**
(45) Date of publication and mention of the grant of the patent: **20.09.2023**
(21) Application number: 17198528.6
(22) Date of filing: 26.10.2017
(51) Int. Cl.: G08C 17/00

(54) **METHOD, APPARATUS AND STORAGE MEDIUM FOR CONTROLLING TARGET DEVICE**
VERFAHREN, VORRICHTUNG UND SPEICHERMEDIUM ZUR STEUERUNG EINER ZIELVORRICHTUNG
PROCÉDÉ, APPAREIL ET SUPPORT D'INFORMATIONS POUR COMMANDER LE DISPOSITIF CIBLE

(30) Priority: 27.10.2016 CN 201610958008
(43) Date of publication of application: 02.05.2018
(73) Proprietor: Beijing Xiaomi Mobile Software Co., Ltd., Beijing 100085 (CN)
(72) Inventor: CHENG, Yue, Beijing 100085 (CN); XIE, Yan, Beijing 100085 (CN); CUI, Qiqi, Beijing 100085 (CN)
(74) Representative: dompatent von Kreisler Selting Werner - Partnerschaft von Patent- und Rechtsanwälten mbB

(56) References cited:
- EP-A1- 3 016 084
- US-A1- 2008 224 026
- US-A1- 2008 271 123
- US-A1- 2014 355 588
- US-A1- 2016 054 023
- US-A1- 2016 116 891

## Description

### TECHNICAL FIELD

The present disclosure relates to a method and an apparatus for controlling a target device in the technical field of smart devices.

### BACKGROUND

With the development of science and technology, there has been a variety of smart devices. For example, smart devices, such as cleaning robot, smart air cleaner and so on, may be operated through remote control of a user and is now widely used in daily life.

In general, a user may control a smart device through a mobile phone application (APP) corresponding to the smart device. Taking a cleaning robot as an example, in a case of a mobile phone and the cleaning robot both connected to a network, the user may trigger an "ON" button on the mobile phone application, so as to send an ON instruction to the cleaning robot at home through the network. When receiving the ON instruction, the cleaning robot can begin operation.

Document US2008/224026A1 discloses that an RF controlled lighting system activates lights in adjacent spaces when a person walks into a first space and then traverses the spaces in sequence. A detection device senses the entry of a person into a first space controlled by the system. A microcontroller activates the lights in that space for immediate light and in the adjacent spaces in preparation for the person to traverse the spaces in either direction from the origin space. As the person traverses the contiguous spaces, controllers in each space sense the person's presence and communicate by RF signals to activate lights along the person's path. The controllers extinguish their lights a predetermined time after the person passes or no one enters a space.

Document US2008/271123A1 discloses a home-automation system (108) and a method (300) for controlling at least one device of a plurality of devices in a home-automation network (104). The home-automation system includes a receiver (202) configured to receive a signal indicative of location a user. The user is located beyond the proximity of the home being automated by the home-automation network. The home-automation system also includes a processor (208) adapted to control the at least one device of the plurality of devices in response to the received indicative signal.

Document US2014/355588A1 discloses that a home network system has a home appliance, a portable terminal to receive a control command associated with the home appliance, and an access point to allow the home appliance or the portable terminal to be connected to a wide area network (WAN), wherein the access point notifies the home appliance of the connection of the portable terminal if the portable terminal connects to the access point, so that the home application detects that a user returns home and performs a certain operation as a user connects to the access point when returning home.

Document US2016/116891A1 discloses that a method for operating a household appliance having at least one sensor for detecting a user of the household appliance includes evaluating a movement of the user sensed by the sensor; providing a switch-on signal to place the household appliance in a state of operational readiness if, in the evaluating step, the movement is recognized as an approaching movement relative to the household appliance that is sensed in a predetermined first sensing region; and outputting an activation signal to activate a control-movement recognition function of the household appliance using the switch-on signal if, in the evaluating step, the movement is recognized as an approaching movement relative to the household appliance that is sensed in a predetermined second sensing region.

Document EP3016084A1 discloses that methods and devices for mode switch. The method includes: detecting whether a user is in a sleeping state; if the user is in the sleeping state, switching a current operation mode to a silent mode; and operating in the silent mode. In the present disclosure, the current operation mode is switched to the silent mode through automatic control.

Document US 2016/054023 A1 discloses a load control system responsive to sensors and mobile devices. The load control system may control an electrical load in a space of a building based on one or more parameters regarding the physical condition of an occupant. The parameters may be biometric parameters of an occupant that may be gathered by one or more sensing devices. The sensing devices may be included in a mobile device. A system controller may receive the parameters and may automatically control the electrical loads in response to the parameters. The system controller may control the electrical load to attempt to adjust the physical condition of the occupant in response to the sensed parameters. The system controller may control the electrical load to provide an alert, an alarm, and/or a warning in response to the sensed parameters.

### SUMMARY

The present disclosure provides a method and an apparatus for controlling a target device. The technical solutions are as follows.

According to a first aspect of examples of the present disclosure, a method for controlling a target device in accordance with claim 1 is provided.

The designated space might be an apartment, a living home, a living room or accommodation, a complete living house, office or the like, wherein the present invention is not limited to a specific designated space. Thus, by the present invention it is determined whether a human body is present in the designated space or not as spatial state. Further, the operation mode of target device, e. g. a smart device, is determined and the target device is operated in accordance to the determined spatial state. Thus, for example, if the owner of an apartment leaves the apartment, it is detected that no further human body is present in the apartment as designated space and in accordance to the second spatial state a cleaning robot is controlled to start cleaning operation.

According to a second aspect of examples of the present disclosure, an apparatus for controlling a target device in accordance with claim 5 includes: a processor, and a machine-readable storage medium storing machine-executable instructions which are executed by the processor.

It shall be understood that both the foregoing general description and the following detailed description are merely exemplary and illustrative, rather than limit the present disclosure.

### BRIEF DESCRIPTION OF DRAWINGS

The accompanying drawings, which are incorporated in and constitute a part of the specification, illustrate examples coincident with the present disclosure and serve to explain the principles of the present disclosure together with the specification.
FIG. 1 illustrates a flow diagram of a method for controlling a target device according to an example of the present disclosure.
FIG. 2 illustrates a flow diagram of a method for controlling a target device according to another example of the present disclosure.
FIG. 3 illustrates a schematic diagram of a designated space according to an exam- ple of the present disclosure.
FIG. 4 illustrates a schematic diagram of a designated space according to another example of the present disclosure.
FIG. 5 illustrates a schematic diagram of a designated space according to still another example of the present disclosure.
FIG. 6 illustrates a schematic diagram of a designated space according to still another example of the present disclosure.
FIG. 7 illustrates a schematic diagram of a designated space according to still another example of the present disclosure.
FIG. 8 illustrates a functional block of logic for controlling a target device according to an example of the present disclosure.
FIG. 9 illustrates a functional block of logic for controlling a target device according to another example of the present disclosure.
FIG. 10 illustrates a hardware structural diagram of an apparatus 1000 for controlling a target device according to an example of the present disclosure.

### DETAILED DESCRIPTION

The embodiments of the present disclosure will be described in further detail with reference to the accompanying drawings so that the objectives, technical solutions and advantages of the present disclosure will become more apparent.

Hereinafter, an embodiment will be described in detail, examples of which are shown in the drawings. When the following descriptions refer to the drawings, the same numerals in the different drawings denote the same or similar elements unless otherwise indicated. The embodiments described in the following examples are not representative of all embodiments coincident with the present disclosure. Rather, they are merely examples of apparatuses and methods coincident with some aspects of the present disclosure as detailed in the appended claims.

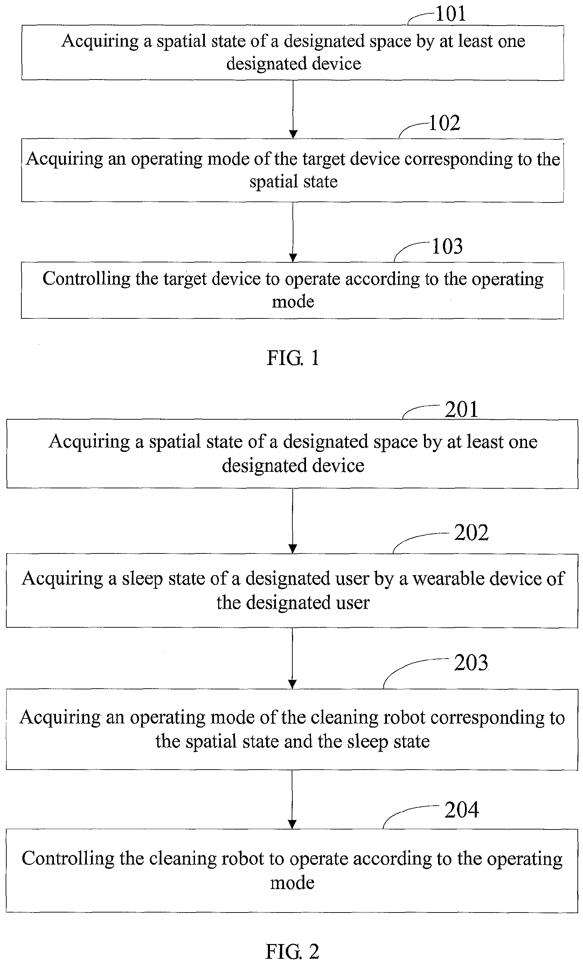

FIG. 1 illustrates a flow diagram of a method for controlling a target device according to an example of the present disclosure. As shown in FIG. 1, the method may include the following blocks.

At block 101, a spatial state of a designated space is acquired by at least one designated device.

At block 102, an operating mode of the target device corresponding to the spatial state is acquired.

At block 103, the target device is controlled to operate according to the operating mode.

Where, the spatial state includes a first spatial state and a second spatial state. The first spatial state is indicative of the presence of a human body in the designated space, and the second spatial state is indicative of the non-presence of a human body in the designated space.

A user may remotely control a smart device (i.e. the target device, may also be referred to as an intelligent device) using a mobile phone to determine operation time of the smart device. If the operation time of the smart device may be actively determined and the smart device is automatically triggered to operate without further operation of the user, the process of controlling the smart device may be implemented automatically.

In an example of the present disclosure, by acquiring the spatial state of the designated space, based on a relationship between the spatial state and the operating mode, the target device may be controlled to operate according to the corresponding operating mode. In this way, the process of controlling the target device does not require further operation of the user, and the intelligence is relatively high.

In an implementation, acquiring the spatial state of the designated space by at least one designated device may include: taking the first spatial state as the spatial state of the designated space when a sensor positioned on the target device has detected the presence of a human body in the designated space; and otherwise, taking the second spatial state as the spatial state of the designated space.

In another implementation, acquiring the spatial state of the designated space by at least one designated device may include: acquiring location information of a communication device; determining a distance between the communication device and the target device according to the location information of the communication device; and taking the first spatial state as the spatial state of the designated space when the distance between the communication device and the target device is less than a preset distance; or taking the second spatial state as the spatial state of the designated space when the distance between the communication device and the target device is greater than or equal to the preset distance. The communication device may include at least one of a mobile terminal and a wearable device which are associated with a user corresponding to the designated space.

In yet another implementation, acquiring the spatial state of the designated space by at least one designated device may include: taking the first spatial state as the spatial state of the designated space when a designated connection indicator of a routing device is acquired; and otherwise, taking the second spatial state as the spatial state of the designated space. The designated connection indicator is indicative of connection established between a communication device and the routing device.

In yet another implementation, acquiring the spatial state of the designated space by at least one designated device may include: taking the first spatial state as the spatial state of the designated space when it is detected that any of home devices in the designated space is on; and otherwise, taking the second spatial state as the spatial state of the designated space.

In yet another implementation, acquiring the spatial state of the designated space by at least one designated device may include: taking the first spatial state as the spatial state of the designated space when any of monitoring devices has detected the presence of a human body in the designated space; and otherwise, taking the second spatial state as the spatial state of the designated space.

The sensor positioned on the target device may be an infrared sensor. The communication device may be a mobile terminal or wearable device of a designated user. The routing device may refer to a wireless router in the designated space. Any of the home devices may include a smart air conditioner, a smart television, a smart washing machine, a smart air cleaner, a smart lamp in the designated space or the like. Any of the monitoring devices may include a monitoring camera or a human body sensor in the designated space.

In an implementation, after acquiring the spatial state of the designated space, the method further includes: acquiring a sleep state of a designated user by a wearable device of the designated user. In this case, acquiring the operating mode of the target device corresponding to the spatial state includes: acquiring the operating mode of the target device corresponding to the spatial state and the sleep state. The designated user may refer to a user corresponding to the designated space.

In an implementation, controlling the target device to operate according to the operating mode may include at least one of: controlling the target device to suspend operation when the operating mode is a first operating mode corresponding to the first spatial state and the target device has been started, or controlling the target device to switch to a silent operating mode when the operating mode is the first operating mode corresponding to the first spatial state and the target device has been started; and controlling the target device to start operation when the operating mode is a second operating mode corresponding to the second spatial state and the target device has not been started.

All of the above alternative technical solutions may form alternative examples of the present disclosure in any combination thereof, which will not be described again herein.

In practice, the method for controlling a target device in examples of the present disclosure may be applied to any device. For example, the executive subject of the method for controlling a target device may be a mobile terminal (e.g., a mobile phone), a home device (e.g., a smart air conditioner), a wearable device (e.g., a smart bracelet), or the target device itself. Where the target device refers to a smart device controlled by the controlling method in examples of the present disclosure, and the target device is not limited to a cleaning robot, a smart air cleaner, and so on.

The designated device may be any device that can detect the presence or non-presence of a human body in the designated space. For example, the designated device may not be limited to the target device, the communication device, the routing device, the home device, or the monitoring device described above. The communication device may be a mobile terminal or a wearable device of a designated user. The routing device may be a wireless router in the designated space. The home device may be a smart air conditioner, a smart television, a smart washing machine, a smart air cleaner, a smart lamp or the like in the designated space. The monitoring device may be a monitoring camera or a human body sensor in the designated space.

FIG. 2 illustrates a flow diagram of a method for controlling a target device according to another example of the present disclosure. As shown in FIG. 2, this example is described with a mobile terminal as the execution subject and a cleaning robot as the target device, and the method specifically includes the following blocks.

At block 201, the mobile terminal acquires a spatial state of a designated space by at least one designated device.

The designated space refers to a space in which the target device is located. Examples of the present disclosure not specifically define the designated space. For example, the designated space may be a domicile of a designated user, and the designated user may be an owner of the target device.

The spatial state includes a first spatial state and a second spatial state. For example, the first spatial state may be indicative of the presence of a human body in the designated space, and the second spatial state may be indicative of the non-presence of a human body in the designated space.

At this block, by the at least one designated device, the mobile terminal may detect whether there is a human body in the designated space or not. For example, if there is a human body in the space, the mobile terminal acquires the first spatial state as the spatial state of the designated space, and if there is nobody in the space, the mobile terminal acquires the second spatial state as the spatial state of the designated space.

For different designated devices, the mobile terminal may have different manners to acquire the spatial state, which is not limited to examples of the present disclosure. The following five manners to acquire the spatial state will be described as examples.

In a first manner, the mobile terminal may take the first spatial state as the spatial state of the designated space when a sensor positioned on the cleaning robot has detected the presence of a human body in the designated space.

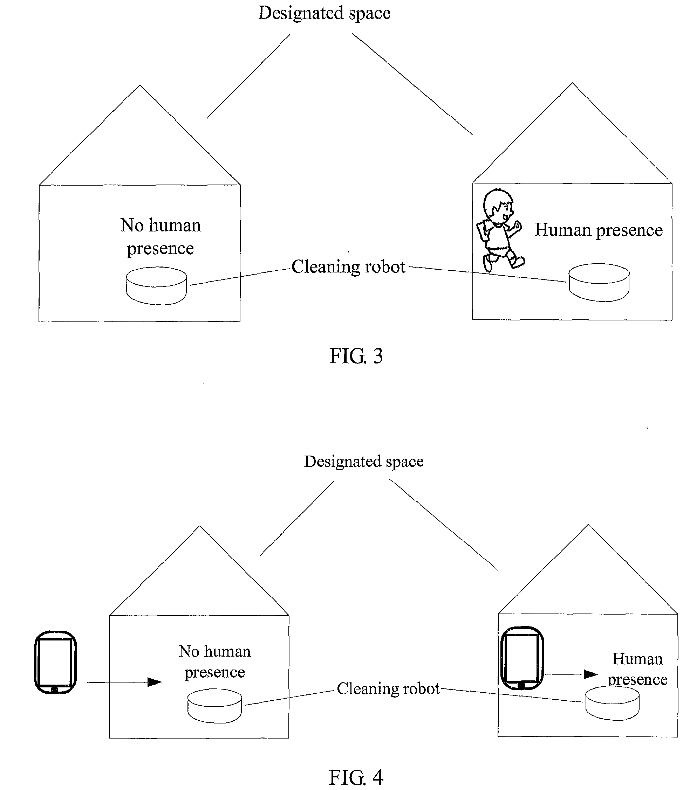

An infrared sensor positioned on the cleaning robot may be taken as an example for the first manner. As shown in FIG. 3, if there is someone in a perceiving range of the infrared sensor, an infrared spectrum received by the infrared sensor will take a change. When the change is detected, the cleaning robot may automatically determine that there is someone in the designated space. At this time, the cleaning robot may generate a first indication for indicating that there is someone in the designated space, and send the first indication to the mobile terminal through a connection pre-established with the mobile terminal. When receiving the first indication, the mobile terminal may take the first spatial state indicated by the first indication as the spatial state of the designated space.

Of course, the above connection between the cleaning robot and the mobile terminal is not limited to examples of the present disclosure. For example, the connection may be a network connection or a Bluetooth connection. The connection mentioned below is the same as that mentioned here, which will not be described again.

In a period of time after the above infrared sensor detects that there is a person in the designated space, the person may move out of the perceiving range of the infrared sensor, or even leave the designated space, resulting in non-presence of a human body in the designated space. In this case, a detection period, for example, a detection period of 10 seconds, may be configured in the cleaning robot, for example. After the detection period from the time when the cleaning robot detects the presence of a human body in the designated space through the infrared sensor, the cleaning robot may once again determine whether the infrared spectrum received by the infrared sensor changes further. If so, it is determined that there is still someone in the designated space; if not, it is determined that there is no one in the designated space, and the mobile terminal may then take the second spatial state as the spatial state of the designated space.

The second manner may include: acquiring location information of a communication device; determining a distance between the communication device and the target device according to the location information of the communication device; and taking the first spatial state as the spatial state of the designated space when the distance between the communication device and the cleaning robot is less than a preset distance; or taking the second spatial state as the spatial state of the designated space when the distance between the communication device and the cleaning robot is greater than or equal to the preset distance.

The distance between the communication device and the cleaning robot relative to the preset distance may be configured to indicate whether a designated user is in the designated space or not. The preset distance is not limited to examples of the present disclosure. For example, the preset distance can be 10 meters.

As shown in FIG. 4, in the second manner, in an example, the communication device may be taken as the mobile terminal of the designated user. The mobile terminal may pre-record location information of the designated space and acquire its own location information in real time. The location information of the designated space may include the location information of the cleaning robot in the designated space. Further, the mobile terminal may calculate the distance between the mobile terminal and the cleaning robot based on the two pieces of location information and compare the calculated distance with the preset distance. Since the mobile terminal is often carried by the designated user, the distance between the mobile terminal and the cleaning robot may be configured to indicate the distance between the designated user and the cleaning robot.

Therefore, if the distance between the mobile terminal and the cleaning robot is less than the preset distance, it may indicate that there is someone in the designated space. At this time, the mobile terminal may generate a first indication for indicating that there is someone in the designated space, and then take the first spatial state indicated by the first indication as the spatial state of the designated space. If the distance between the mobile terminal and the cleaning robot is greater than or equal to the preset distance, it may indicate that there is no one in the designated space. At this time, the mobile terminal may generate a second indication for indicating that there is no one in the designated space, and then take the second spatial state indicated by the second indication as the spatial state of the designated space.

Of course, the communication device in the second manner may also be a wearable device of the designated user. In an example, the wearable device may include a smart bracelet. Similar to the mobile terminal, the smart bracelet may also acquire the distance between itself and the cleaning robot. Since the smart bracelet is usually carried by the designated user, the distance between the smart bracelet and the cleaning robot may also indicate the distance between the designated user and the cleaning robot. If the distance between the smart bracelet and the cleaning robot is less than the preset distance, it may indicate that there is someone in the designated space. At this time, the smart bracelet may generate the first indication and then send the first indication to the mobile terminal through a connection pre-established with the mobile terminal, so that the mobile terminal acquires the first spatial state indicated by the first indication as the spatial state of the designated space. If the distance is greater than or equal to the preset distance, the mobile terminal may take the second spatial state as the spatial state of the designated space through the second indication generated by the smart bracelet.

The third manner may include: taking the first spatial state as the spatial state of the designated space when a designated connection indicator of a routing device is acquired. The designated connection indicator may be indicative of connection established between a communication device and the routing device.

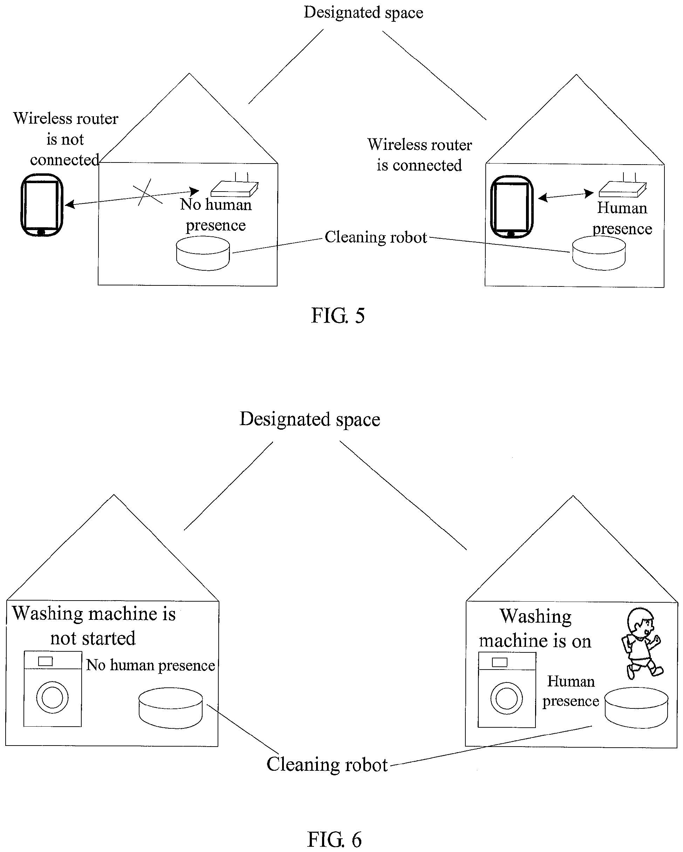

In an example, as shown in FIG. 5, the routing device may be a wireless router in the designated space. Since the communication device (e.g., a mobile terminal) is often carried by a designated user, when the communication device detects a connection with the wireless router in the designated space, it may indicate that the designated user is in the designated space, further indicating that there is someone in the designated space. At this time, the communication device may generate a designated connection indicator and send the designated connection indicator to the mobile terminal through the connection pre-established with the mobile terminal. When receiving the designated connection indicator, the mobile terminal may take the first spatial state as the spatial state of the designated space according to the configured correspondence between the designated connection indicator and the spatial state.

In the above example, the spatial state of the designated space is detected according to a connection state between one communication device and the routing device. In fact, the spatial state may also be detected according to a plurality of communication devices to improve the accuracy of detection. For example, a plurality of communication devices (such as a tablet computer, a smart watch, etc., except for the mobile terminal as the executive subject) each may establish a connection with the mobile terminal as the executive subject. Once the mobile terminal acquires at least one designated connection indicator by itself or a plurality of communication devices, the mobile terminal may determine that there is someone in the designated space and then take the first spatial state as the spatial state of the designated space.

The fourth manner may include: taking the first spatial state as the spatial state of the designated space when it is detected that any of the home devices is on.

In an example, as shown in FIG. 6, the home device may be a washing machine in the designated space. If the washing machine is on, it may indicate that someone in the designated space is using the washing machine and therefore it may indicate that there is someone in the designated space. At this time, the washing machine may generate an on-state indication. In this case, the process that the mobile terminal acquires the spatial state is similar to that of the above third manner, except that the basis for acquiring the first spatial state here is the correspondence between the on-state indication and the spatial state.

In the above example, the spatial state of the designated space is detected according to the on-state of a home device. In fact, the spatial state may also be detected according to a plurality of home devices to improve the accuracy of detection. For example, a plurality of home devices (e.g., a television terminal, an air conditioner terminal, etc.) each may establish a connection with the mobile terminal. Once the mobile terminal acquires at least one on-state indication, it may determine that there is someone in the designated space and then take the first spatial state as the spatial state of the designated space.

The fifth manner may include taking the first spatial state as the spatial state of the designated space when any of monitoring devices has detected the presence of a human body in the designated space.

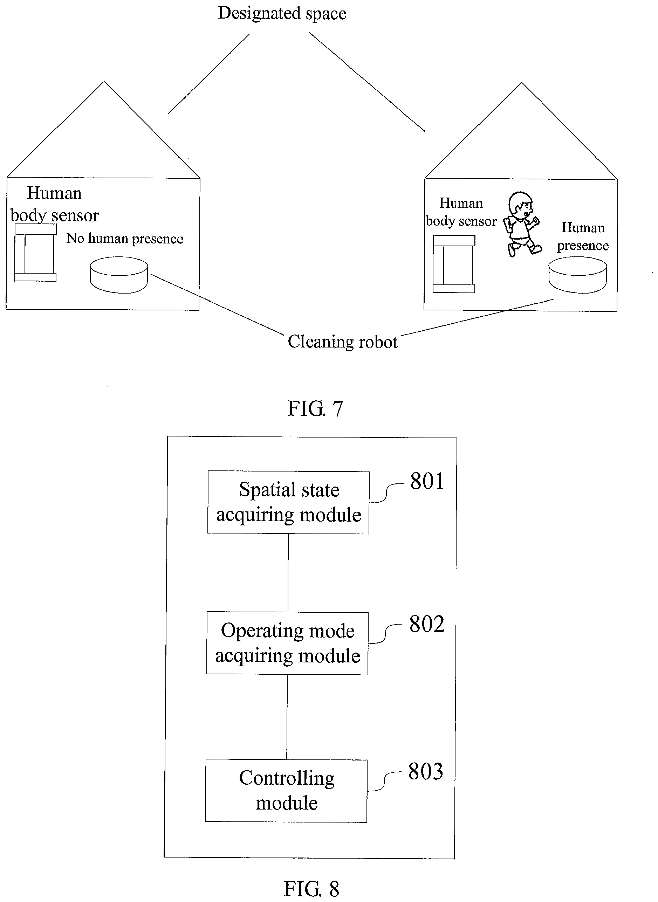

In an example, as shown in FIG. 7, the monitoring device may be a human body sensor in the designated space. If the human body sensor detects that someone is moving in the designated space, it may be determined that there is a human body in the designated space. At this time, the human body sensor may generate the first indication. In this case, the process that the mobile terminal acquires the spatial state is similar to the above first manner.

In the above example, the spatial state of the designated space is detected by a monitoring device. In fact, the spatial state may also be detected by a plurality of monitoring devices to improve the accuracy of detection. For example, a plurality of monitoring devices (such as, a human body sensor, a monitoring camera and so on) each may establish a connection with the mobile terminal. Once the mobile terminal acquires at least one first indication, the mobile terminal may determine that there is someone in the designated space and then take the first spatial state as the spatial state of the designated space.

Of course, to adequately determine whether there is a human body in the designated space and make the acquired spatial state more accurate, any of the above five manners may be combined in the case that each of the designated devices establishes a connection with each other, so that the mobile terminal may acquire at least one first indication, at least one second indication, at least one designated connection indicator, or at least one on-state indication, each of which may be used to determine whether there is someone in the designated space to allow the corresponding spatial state to be acquired as the spatial state of the designated space.

For example, the mobile terminal may acquire the spatial state of the designated space by the monitoring device and the communication device. Once the mobile terminal acquires at least one first indication, the mobile terminal may take the first spatial state indicated by the at least one first indication as the spatial state of the designated space; once the mobile terminal acquires at least one second indication and does not take the first indication, the mobile terminal may take the second spatial state indicated by the at least one second indication as the spatial state of the designated space.

At block 202, a sleep state of a designated user is acquired by a wearable device of the designated user.

Based on the above block 201, the mobile terminal may determine whether there is someone in the designated space or not. To further improve the intelligence of the control process, at block 202, the mobile terminal may acquire the sleep state of the designated user by the wearable device.

The sleep state includes a first sleep state and a second sleep state. For example, the first sleep state is to indicate that the designated user is in sleep and the second sleep state is to indicate that the designated user is not in sleep.

The wearable device is not limited to smart bracelet or smart watch of the designated user. The block 202 will be described with a smart bracelet as an example. The smart bracelet may collect temperature information, heart rate information and displacement information of the designated user in real time through its own temperature sensor, electro-cardiography sensor and pressure sensor, and compare the values of the information with preset values (preset temperature value: 36.0 to 36.3 degrees, preset heart rate value: 45 to 60/min, preset displacement value: 0 to 1 meter). If the values of the information are in the respective preset value ranges, a first sleep state indication may be generated. Otherwise, a second sleep state indication may be generated.

The smart bracelet may send the first sleep state indication or the second sleep state indication to the mobile terminal through the connection pre-established with the mobile terminal, so that the mobile terminal acquires the first sleep state or the second sleep state.

Based on the above block 201, if the mobile terminal determines that there is someone in the designated space, determining the sleep state of the designated user may facilitate further determining the operation time of the cleaning robot so as to avoid disturbing the designated user. However, if the mobile terminal determines that there is no one in the designated space, the cleaning robot will not disturb the designated user no matter the designated user is in sleep or not. At this time, the block 202 may not be performed, thereby simplifying the control process.

At block 203, an operating mode of the cleaning robot corresponding to the spatial state and the sleep state is acquired.

Based on the above block 201 and block 202, the mobile terminal has acquired the spatial state of the designated space and the sleep state of the designated user. The designated user may choose the operation time of the cleaning robot and control the cleaning robot to operate. However, in an example of the present disclosure, to implement the control process automatically, considering that the designated user often does not want to be disturbed by the noise of the cleaning robot, whether there is a human body (e.g. the designated user) in the designated space and the sleep state of the designated user may both be considered in controlling the cleaning robot as conditions, so that the mobile terminal may independently determine the operation time of the cleaning robot.

To achieve the above objective, a correspondence between spatial state, sleep state and operating mode of the cleaning robot may be pre-configured in the mobile terminal, so that the mobile terminal may acquire the corresponding operating mode of the cleaning robot by querying the correspondence when the spatial state and the sleep state has been acquired. The operating mode is to indicate how the cleaning robot operates.

The method for configuring the above correspondence may be such that the mobile terminal may provide a user operation interface and allow the user to set, by itself, the correspondence between spatial state, sleep state and operating mode, so that the mobile terminal may acquire the operating mode based on the correspondence set by the user.

In an example, the correspondence is given in Table 1.

**Table 1**

| Spatial state | Sleep state | Operating mode |
|---|---|---|
| First spatial state | First sleep state | Suspend operation/switch to a silent operating mode |
| First spatial state | Second sleep state | Start operation |
| Second spatial state | Any sleep state | Start operation |

The silent operating mode refers to the operating mode in which the operating noise of the cleaning robot is lower than a preset threshold. The manner of reducing the operating noise is not limited to examples of the present disclosure. For example, the cleaning robot may reduce the operating noise by lowering the operating speed or power. In addition, the preset threshold is not limited to examples of the present disclosure. For example, the preset threshold may be 50 dB.

It is noted that the above block 202 and block 203 are alternative blocks of examples of the present disclosure. The conditions of controlling the cleaning robot are extended by acquiring the sleep state of the designated user as well as the spatial state of the designated space, so that the control process becomes more intelligent. Some examples of the present disclosure may not perform the block 202 and block 203 but directly acquire the operating mode of the cleaning robot corresponding to the spatial state after performing the block 201. In this way, the control process may also be automated. For example, the correspondence between the spatial state and the operating mode may be given in Table 2 below:

**Table 2**

| Spatial state | Operating mode |
|---|---|
| First spatial state | Suspend operation/switch to a silent operating mode |
| First spatial state | Suspend operation |
| Second spatial state | Start operation |

At block 204, the cleaning robot is controlled to operate according to the operating mode.

Based on the above block 203, the mobile terminal acquires the operating mode corresponding to the cleaning robot, and therefore, at block 204, the cleaning robot may be controlled according to the operating mode. Since the operating mode has a plurality of values or states, the operation to be executed by the cleaning robot may be different, which is not limited to examples of the present disclosure. The following is described below with Table 1 as an example.

As shown in row 2 of Table 1, the operating mode corresponding to the first spatial state and the first sleep state is to suspend operation or switch to the silent operating mode. Therefore, the mobile terminal may control the cleaning robot to suspend operation or switch to the silent operating mode.

In this example, to avoid disturbing a person in the designated space when the cleaning robot is operating, the mobile terminal generates an instruction of suspending operation, and then sends an instruction of suspending operation to the cleaning robot through the connection between the mobile terminal and the cleaning robot. The cleaning robot may suspend operation when receiving the instruction of suspending operation. Alternatively, to reduce the disturbance to a person in the designated space, the mobile terminal generates an instruction of switching to the silent operating mode and then sends the instruction of switching to the silent operating mode to the cleaning robot through the connection between the mobile terminal and the cleaning robot. The cleaning robot may switch to the silent operating mode when receiving the instruction of switching to the silent operating mode.

Of course, if the cleaning robot is not started yet, the current non-started state may be kept.

As shown in row 3 or row 4 of Table 1, the operating mode corresponding to a combination of the first spatial state and the second sleep state is to start operation, or a combination of the second spatial state and any of the sleep states corresponds to starting operation, therefore, the mobile terminal may control the cleaning robot to start operation.

In this example, the mobile terminal generates an instruction of starting operation, and then sends the instruction of starting operation to the cleaning robot through the connection between the mobile terminal and the cleaning robot. The cleaning robot may start operation when receiving the instruction of starting operation.

Of course, if the cleaning robot is already started, the current operating state may be maintained.

In an example of the present disclosure, a control process triggered at a particular time is described as an example. In an actual scene, all the control processes that are continuous in time may be carried out by the controlling method according to examples of the present disclosure. For example, in combination with the above controlling method, when the mobile terminal acquires the first indication and the corresponding operating mode as suspending operation, it may control the cleaning robot to suspend operation so as to avoid disturbing a person in the designated space. Since the mobile terminal detects the spatial state of the designated space in real time, after a particular period of time, the mobile terminal may acquire the second indication, further acquire the corresponding operating mode as starting operation, and then control the cleaning robot to continue operation until the cleaning work is completed.

A duration for which the target device is controlled to operate according to the operating mode is not limited to examples of the present disclosure. In an example, when the operating mode is suspending operation, the duration for which the operation is in suspension may be 30 minutes.

A specific control process is described by using the mobile terminal as the execution subject in the above examples of the present disclosure. Considering that any device (such as, home device, wearable device, target device or the like) may be used as the execution subject of the controlling method, thus the control process may have two cases in which the device itself is used as the designated device or the device itself is not used as the designated device.

In the first case, if the device is not used as the designated device, the device may receive the spatial state indication sent by the designated device, through the connection with the designated device. As shown in FIG. 2, the mobile terminal may be used as the execution subject rather than the designated device.

In the second case, if the device is used as the designated device, the device may detect by itself whether there is someone in the designated space, in a way that it may directly acquire the spatial state of the designated space. For example, the device is a smart bracelet of the designated user. When the smart bracelet detects that there is someone in the designated space, it may generate the first indication, such that the smart bracelet may take the first spatial state indicated by the first indication as the spatial state of the designated space.

In an example of the present disclosure, by acquiring the spatial space of the designated space, for example, whether there is someone in the designated space, the target device may be controlled to operate according to the operating mode based on the relationship between the spatial state and the operating mode. For example, when there is someone in the designated space, the target device may be controlled to suspend operation to avoid disturbing the person in the designated space. The control process does not require a user to operate and thus the intelligence is relatively high.

In addition, by acquiring the sleep state of the designated user and acquiring the corresponding operating mode according to the correspondence between the spatial state and the sleep state, the target device is controlled to operate according to the operating mode, which may further improve the intelligence of the control process.

In addition, there may be different operating mode of various types, such as starting operation, suspending operation or switching to the silent operating mode. When the acquired operating mode is to start operation, the target device may be controlled to start operation. When the acquired operating mode is to suspend operation, the target device may be controlled to suspend operation. When the acquired operating mode is to switch to the silent operating mode, the target device may be controlled to switch to the silent operating mode. Therefore, the operation time and operation manner of controlling the target device may be determined independently, which is not only high in intelligence, but also enables the process that the target device operates to be continuous (e.g., starting the operation again after the operation is suspended).

Corresponding to examples of the above method for controlling a target device, the present disclosure further provides an example of an apparatus for controlling a target device.

In the present disclosure, the apparatus for controlling a target device may be a mobile phone, a computer, a digital broadcasting terminal, a message receiving and sending device, a game console, a tablet device, a medical device, a fitness device, a personal digital assistant, and so on. Examples of the apparatus for controlling a target device may be implemented by software, or may be implemented by hardware or by a combination of hardware and software. From a hardware level, the apparatus for controlling a target device may include a processor and a machine-readable storage medium.

In different examples, the machine-readable storage medium may be a Radom Access Memory (RAM), a volatile memory, a non-volatile memory, a flash memory, a storage drive (e.g., a hard disk drive), a solid state hard disk, any type of storage disks (such as a compact disc, a DVD, etc.), or a similar storage medium, or a combination thereof.

Further, logic for controlling a target device is stored on the machine-readable storage medium. FIG. 8 illustrates a diagram of a functional module of logic for controlling a target device according to an example of the present disclosure. According to functions, the logic for controlling a target device may include a spatial state acquiring module 801, an operating mode acquiring module 802 and a controlling module 803.

The spatial state acquiring module 801 is configured to acquire a spatial state of a designated space.

The operating mode acquiring module 802 is configured to acquire an operating mode of a target device corresponding to the spatial state.

The controlling module 803 is configured to control the target device to operate according to the operating mode.

Herein the spatial state includes a first spatial state and a second spatial state, the first spatial state is indicative of the presence of a human body in the designated space, and the second spatial state is indicative of the non-presence of a human body in the designated space.

A user may remotely control a smart device on a mobile phone to determine the operation time of the smart device. If the operation time of the smart device may be actively determined and the smart device is automatically triggered to operate without operation of the user, the process of controlling the smart device may be implemented automatically.

In an example of the present disclosure, by acquiring the spatial state of the designated space, based on a relationship between the spatial state and the operating mode, the target device may be controlled to operate according to the corresponding operating mode. In this way, the process of controlling the target device does not require operation of the user, and the intelligence is relatively high.

In an implementation, the spatial state acquiring module 801 may be configured to take the first spatial state as the spatial state of the designated space when a sensor positioned on the target device has detected presence of a human body in the designated space; and otherwise, take the second spatial state as the spatial state of the designated space.

In another possible implementation, the spatial state acquiring module 801 may be configured to acquire location information of a communication device, determine a distance between the communication device and the target device according to the location information of the communication device, and take the first spatial state as the spatial state of the designated space when the distance between the communication device and the target device is less than a preset distance; and take the second spatial state as the spatial state of the designated space when the distance between the communication device and the target device is greater than or equal to the preset distance.

In yet another implementation, the spatial state acquiring module 801 may be configured to take the first spatial state as the spatial state of the designated space when a designated connection indicator of a routing device is acquired, and otherwise, take the second spatial state as the spatial state of the designated space. The designated connection indicator is indicative of connection established between a communication device and the routing device.

In yet another implementation, the spatial state acquiring module 801 may be configured to take the first spatial state as the spatial state of the designated space when it is detected that any of home devices is on; and otherwise, take the second spatial state as the spatial state of the designated space.

In yet another implementation, the spatial state acquiring module 801 may be configured to take the first spatial state as the spatial state of the designated space when a monitoring device in the designated space detected presence of a human body in the designated space; and otherwise, take the second spatial state as the spatial state of the designated space.

In an implementation, a sensor positioned on the target device may be an infrared sensor. The communication device may be a mobile terminal or wearable device of a designated user. The routing device may be a wireless router in the designated space. The home devices may include a smart air conditioner, a smart television, a smart washing machine, a smart air cleaner or a smart lamp in the designated space. The monitoring devices may include a monitoring camera or a human body sensor in the designated space.

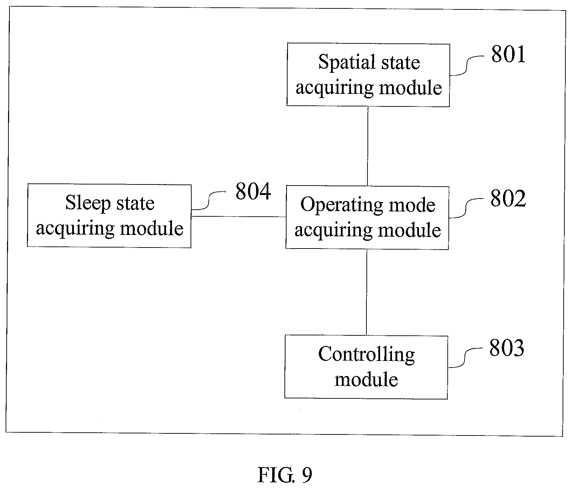

In an implementation, as shown in FIG. 9, the logic further includes a sleep state acquiring module 804.

The sleep state acquiring module 804 is configured to acquire the sleep state of the designated user by a wearable device of the designated user.

In this case, the operating mode acquiring module 802 may be configured to acquire the operating mode of the target device corresponding to the spatial state and the sleep state.

In an implementation, the controlling module 803 may be configured to control the target device to suspend operation if the operating mode is a first operating mode corresponding to the first spatial state and the target device has been started.

In another possible implementation, the controlling module 803 may be configured to control the target device to switch to a silent operating mode if the operating mode is the first operating mode corresponding to the first spatial state and the target device has been started.

In yet another possible implementation, the controlling module 803 may be configured to control the target device to start operation if the operating mode is a second operating mode and the target device has not been started.

All of the above alternative technical solutions may form alternative examples of the present disclosure in any combination thereof, which will not be described again herein.

The example below may be implemented with software, which may further describe how the apparatus for controlling a target device runs the logic for controlling a target device. In this example, the logic for controlling a target device in the present disclosure should be understood as machine-executable instructions stored in the machine-readable storage medium. The processor on the apparatus for controlling a target device in the present disclosure may perform the above method for controlling a target device by invoking the machine-executable instructions.

It should be noted that the apparatus for controlling a target device provided by the above examples is exemplified only by the division of each of the above functional modules when controlling a target device. In the practical application, the above function may be assigned to different function modules according to requirements, e.g., the internal structure of the apparatus is divided into different functional modules to complete all or part of the functions described above. In addition, the apparatus for controlling a target device provided by the above examples belongs to the same concept as the method for controlling device provided by the above examples, and the specific implementation thereof may be referred to the method example, which will not be described again herein.

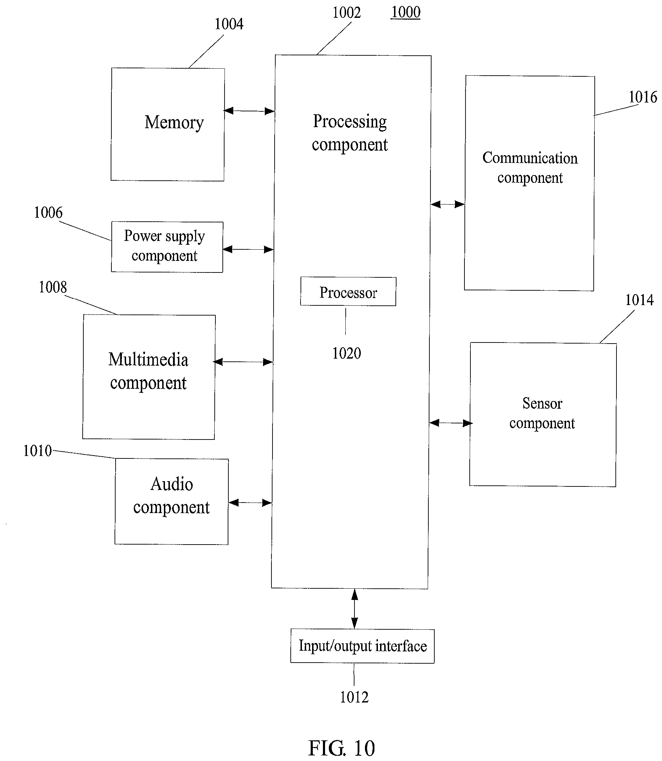

FIG. 10 illustrates a block diagram of an apparatus 1000 for controlling a target device according to an example of the present disclosure. For example, the apparatus 1000 may be a mobile phone, a computer, a digital broadcasting terminal, a message receiving and sending device, a game console, a tablet device, a medical device, a fitness device, a personal digital assistant, and so on.

Referring to FIG. 10, the apparatus 1000 may include one or more of the following components: a processing component 1002, a memory 1004, a power supply component 1006, a multimedia component 1008, an audio component 1010, an input/output (I/O) interface 1012, a sensor component 1014, and a communication component 1016.

The processing component 1002 generally controls overall operations of the device 1000, such as operations associated with display, phone calls, data communications, camera operations, and recording operations. The processing component 1002 may include one or more processors 1020 to execute instructions to perform all or part of the blocks of the above method. In addition, the processing component 1002 may include one or more modules which facilitate the interaction between the processing component 1002 and other components. For example, the processing component 1002 may include a multimedia module to facilitate the interaction between the multimedia component 1008 and the processing component 1002.

The memory 1004 may be configured to store various types of data to support the operation of the apparatus 1000. Examples of such data include instructions for any application or method operated on the apparatus 1000, contact data, phonebook data, messages, pictures, videos, and so on. The memory 1004 may be implemented by any type of volatile or non-volatile storage devices or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, a magnetic or optical disk.

The power supply component 1006 may provide power to different components of the apparatus 1000. The power supply component 1006 may include a power management system, one or more power supplies, and other components associated with generating, managing, and distributing power for the apparatus 1000.

The multimedia component 1008 may include a screen providing an output interface between the apparatus 1000 and a user. In some examples, the screen may include a Liquid Crystal Display (LCD) and a Touch Panel (TP). If the screen includes the TP, the screen may be implemented as a touch screen to receive input signals from the user. The TP may include one or more touch sensors to sense touches, slips, and gestures on the TP. The touch sensors may not only sense a boundary of a touch or slip action, but also sense a duration and a pressure associated with the touch or slip action. In some examples, the multimedia component 1008 may include a front camera and/or a rear camera. The front camera and/or rear camera may receive external multimedia data when the apparatus 1000 is in an operating mode, such as a photographing mode or a video mode. Each of the front camera and the rear camera may be a fixed optical lens system or have focal length and optical zooming capability.

The audio component 1010 may be configured to output and/or input an audio signal. For example, the audio component 1010 may include a microphone (MIC) configured to receive an external audio signal when the apparatus 1000 is in an operating mode, such as a call mode, a recording mode, and a voice recognition mode. The received audio signal may be further stored in the memory 1004 or sent via the communication component 1016. In some examples, the audio component 1010 further includes a speaker to output an audio signal.

The I/O interface 1012 may provide an interface between the processing component 1002 and peripheral interface modules. The above peripheral interface modules may include a keyboard, a click wheel, buttons, and so on. These buttons may include, but are not limited to, a home button, a volume button, a starting button, and a locking button.

The sensor component 1014 may include one or more sensors to provide status assessments of various aspects for the apparatus 1000. For example, the sensor component 1014 may detect the on/off status of the apparatus 1000, and relative positioning of component, for example, the component is a display and a keypad of the apparatus 1000. The sensor component 1014 may also detect a change in position of the apparatus 1000 or one component of the apparatus 1000, a presence or absence of the contact between a user and the apparatus 1000, an orientation or an acceleration/deceleration of the apparatus 1000, and a change in temperature of the device apparatus. The sensor component 1014 may include a proximity sensor configured to detect the presence of a nearby object without any physical contact. The sensor component 1014 may further include an optical sensor, such as a CMOS or CCD image sensor which is used in imaging applications. In some examples, the sensor component 1014 may further include an acceleration sensor, a gyroscope sensor, a magnetic sensor, a pressure sensor, or a temperature sensor.

The communication component 1016 may be configured to facilitate wired or wireless communication between the apparatus 1000 and other devices. The apparatus 1000 may access a wireless network that is based on a communication standard, such as Wi-Fi, 2G or 3G, or a combination thereof. In an example, the communication component 1016 receives a broadcast signal or broadcast-associated information from an external broadcast management system via a broadcast channel. In an example, the communication component 1016 further includes a Near Field Communication (NFC) module to facilitate short-range communications. For example, the NFC module may be implemented based on a Radio Frequency Identification (RFID) technology, an Infrared Data Association (IrDA) technology, an Ultra Wideband (UWB) technology, a Bluetooth (BT) technology and other technologies.

In an example, the apparatus 1000 may be implemented by one or more Application Specific Integrated Circuits (ASICs), Digital Signal Processors (DSPs), Digital Signal Processing Devices (DSPDs), programmable Logic Devices (PLDs), Field Programmable Gate Arrays (FPGAs), controllers, microcontrollers, microprocessors, or other electronic components for performing the above method for controlling a target device.

In an example, there is also provided a non-transitory machine-readable storage medium including instructions, such as a memory 1004 including instructions. The above instructions may be executed by the processor 1020 of the apparatus 1000 to perform the above method. For example, the non-transitory machine-readable storage medium may be a ROM, a Random Access Memory (RAM), a CD-ROM, a magnetic tape, a floppy disk, and an optical data storage device and so on. The machine-readable storage medium stores machine-executable instructions executable by one or more processors that cause the processor to perform the above method for controlling a target device.

It is to be understood that the present disclosure is not limited to the precise structure described above and shown in the accompanying drawings, and that various modifications and changes may be made without departing from the scope thereof. The scope of the present disclosure is limited only by the appended claims.

## Claims

1. A method for controlling a target device, applied to the target device, the method comprising:
acquiring a spatial state of a designated space (101, 201) by at least one designated device;
acquiring a sleep state of a user corresponding to the designated space when the spatial state of the designated space indicates presence of the user in the designated space (202);
acquiring an operating mode of the target device corresponding to the spatial state and the sleep state (203); and
controlling the target device to operate according to the operating mode (103, 204);
wherein the spatial state comprises a first spatial state indicative of the presence of a human body in the designated space and a second spatial state indicative of the non-presence of a human body in the designated space;
**characterized in that**, acquiring the spatial state of the designated space by at least one designated device comprises at least two of:
acquiring location information of a communication device, determining a distance between the communication device and the target device according to the location information of the communication device, and taking the first spatial state as the spatial state of the designated space when the distance between the communication device and the target device is less than a preset distance;
taking the first spatial state as the spatial state of the designated space when a designated connection indicator of a routing device is acquired, wherein the designated connection indicator is indicative of connection established between a communication device and the routing device; or
taking the first spatial state as the spatial state of the designated space when it is detected that a home device in the designated space is on, wherein the home device comprises at least one of a smart air conditioner, a smart television, a smart washing machine, a smart air cleaner and a smart lamp.

2. The method according to claim 1, wherein
the sensor preferably comprises an infrared sensor;
the communication device comprises at least one of a mobile terminal and a wearable device which are associated with a user corresponding to the designated space;
the routing device comprises a wireless router in the designated space, and the communication device comprises at least one of a mobile terminal and a wearable device associated with a user corresponding to the designated space.

3. The method according to claim 1, wherein controlling the target device to operate according to the operating mode (103, 204) comprises at least one of:
controlling the target device to suspend operation when the operating mode is a first operating mode corresponding to the first spatial state and the target device has been started, or
controlling the target device to switch to a silent operating mode when the operating mode is the first operating mode and the target device has been started; and
controlling the target device to start operation when the operating mode is a second operating mode corresponding to the second spatial state and the target device has not been started.

4. The method according to claim 1, wherein acquiring the sleep state of the user (202) corresponding to the designated space comprises:
acquiring the sleep state of the user by a wearable device of the user.

5. An apparatus (1000) for controlling a target device, **characterized by** that, the apparatus comprising:
a processor (1020), and
a machine-readable storage medium storing machine-executable instructions which are executed by the processor (1020) to perform the method for controlling the target device according to any of claims 1-4.

## Patentansprüche

1. Verfahren zum Steuern einer Zielvorrichtung, angewandt auf die Zielvorrichtung, wobei das Verfahren die folgenden Schritte aufweist:
Erfassen eines räumlichen Zustands eines bestimmten Raums (101, 201) durch mindestens eine bestimmte Vorrichtung;
Erfassen eines Schlafzustands eines dem bestimmten Raum entsprechenden Users, wenn der räumliche Zustand des bestimmten Raums die Anwesenheit des Users in dem bestimmten Raum angibt (202);
Erfassen eines dem räumlichen Zustand und dem Schlafzustand entsprechenden Betriebsmodus der Zielvorrichtung (203); und
Steuern der Zielvorrichtung zum Betrieb gemäß dem Betriebsmodus (103, 204);
wobei der räumliche Zustand einen ersten räumlichen Zustand aufweist, der die Anwesenheit eines menschlichen Körpers in dem bestimmten Raum angibt, und einen zweiten räumlichen Zustand aufweist, der die Abwesenheit eines menschlichen Körpers in dem bestimmten Raum angibt;
**dadurch gekennzeichnet, dass** das Erfassen des räumlichen Zustands eines bestimmten Raums durch mindestens eine bestimmte Vorrichtung mindestens zwei der folgenden Schritte aufweist:
Erfassen von Standortinformationen einer Kommunikationsvorrichtung, Bestimmen einer Entfernung zwischen der Kommunikationsvorrichtung und der Zielvorrichtung gemäß den Standortinformationen der Kommunikationsvorrichtung, und verwenden des ersten räumlichen Zustands als den räumlichen Zustand des bestimmten Raums, wenn die Entfernung zwischen der Kommunikationsvorrichtung und der Zielvorrichtung geringer als eine vorgegebene Entfernung ist;
Verwenden des ersten räumlichen Zustands als den räumlichen Zustand des bestimmten Raums, wenn ein bestimmter Verbindungsindikator einer Routing-Vorrichtung erfasst wird, wobei der bestimmte Verbindungsindikator eine zwischen einer Kommunikationsvorrichtung und der Routing-Vorrichtung hergestellte Verbindung angibt; oder
Verwenden des ersten räumlichen Zustands als den räumlichen Zustand des bestimmten Raums, wenn erkannt wird, dass ein Heimgerät in dem bestimmten Raum eingeschaltet ist, wobei das Heimgerät mindestens eines von einer intelligenten Klimaanlage, einem intelligenten Fernseher einer intelligenten Waschmaschine, einem intelligenten Luftreiniger und einer intelligenten Leuchte umfasst.

2. Verfahren nach Anspruch 1, bei welchem
der Sensor vorzugsweise einen Infrarotsensor umfasst;
die Kommunikationsvorrichtung mindestens eines von einem mobilen Endgerät und einer tragbaren Vorrichtung umfasst, die einem dem bestimmten Raum entsprechenden User zugeordnet sind;
die Routing-Vorrichtung einen drahtlosen Router in dem bestimmten Raum umfasst, und die Kommunikationsvorrichtung mindestens eines von einem mobilen Endgerät und einer tragbaren Vorrichtung umfasst, welche einem dem bestimmten Bereich entsprechenden User zugeordnet ist.

3. Verfahren nach Anspruch 1, bei welchem das Steuern der Zielvorrichtung zum Betrieb gemäß dem Betriebsmodus (103, 204) mindestens einen der folgenden Schritte aufweist:
Steuern der Zielvorrichtung zum Aussetzen des Betriebs, wenn der Betriebsmodus ein erster Betriebsmodus ist, der dem ersten räumlichen Zustand entspricht, und die Zielvorrichtung gestartet wurde; oder
Steuern der Zielvorrichtung zum Wechsel in einen stillen Betriebsmodus, wenn der Betriebsmodus der erste Betriebsmodus ist und die Zielvorrichtung gestartet wurde; und
Steuern der Zielvorrichtung zum Starten des Betriebs, wenn der Betriebsmodus ein zweiter Betriebsmodus ist, der dem zweiten räumlichen Zustand entspricht, und die Zielvorrichtung nicht gestartet wurde.

4. Verfahren nach Anspruch 1, bei welchem das Erfassen des Schlafzustands des dem bestimmten Raum entsprechenden Users (202) den folgenden Schritt aufweist:
Erfassen des Schlafzustands des Users mittels einer tragbaren Vorrichtung des Users.

5. Vorrichtung (1000) zum Steuern einer Zielvorrichtung, **dadurch gekennzeichnet, dass** die Vorrichtung aufweist:
einen Prozessor (1020), und
ein maschinenlesbares Speichermedium, das maschinell ausführbare Befehle speichert, welche von dem Prozessor (1020) ausgeführt werden, um das Verfahren zum Steuern der Zielvorrichtung nach einem der Ansprüche 1 - 4 auszuführen.

## Revendications

1. Procédé de commande d'un dispositif cible, appliqué au dispositif cible, le procédé comprenant : l'acquisition d'un état spatial d'un espace désigné (101, 201) par au moins un dispositif désigné ;
l'acquisition d'un état de sommeil d'un utilisateur correspondant à l'espace désigné lorsque l'état spatial de l'espace désigné indique la présence de l'utilisateur dans l'espace désigné (202) ;
l'acquisition d'un mode de fonctionnement du dispositif cible correspondant à l'état spatial et à l'état de sommeil (203) ; et
la commande du dispositif cible pour fonctionner selon le mode de fonctionnement (103, 204) ;
dans lequel l'état spatial comprend un premier état spatial indiquant la présence d'un corps humain dans l'espace désigné et un second état spatial indiquant la non présence d'un corps humain dans l'espace désigné ;
**caractérisé en ce que,** l'acquisition de l'état spatial de l'espace désigné par au moins un dispositif désigné comprend au moins deux parmi :
l'acquisition des informations d'emplacement d'un dispositif de communication, la détermination d'une distance entre le dispositif de communication et le dispositif cible en fonction des informations d'emplacement du dispositif de communication, et le fait de prendre le premier état spatial en tant qu'état spatial de l'espace désigné lorsque la distance entre le dispositif de communication et le dispositif cible est inférieure à une distance prédéfinie ;
le fait de prendre le premier état spatial en tant qu'état spatial de l'espace désigné lorsqu'un indicateur de connexion désigné d'un dispositif de routage est acquis, dans lequel l'indicateur de connexion désigné indique une connexion établie entre un dispositif de communication et le dispositif de routage ; ou
le fait de prendre le premier état spatial en tant qu'état spatial de l'espace désigné lorsqu'il est détecté qu'un dispositif domestique dans l'espace désigné est activé, dans lequel le dispositif domestique comprend au moins l'un parmi un climatiseur intelligent, une télévision intelligente, une machine à laver intelligente, un nettoyeur à air intelligent et une lampe intelligente.

2. Procédé selon la revendication 1, dans lequel
le capteur comprend de préférence un capteur infrarouge ;
le dispositif de communication comprend au moins l'un parmi un terminal mobile et un dispositif portable qui sont associés à un utilisateur correspondant à l'espace désigné ;
le dispositif de routage comprend un routeur sans fil dans l'espace désigné, et le dispositif de communication comprend au moins l'un parmi un terminal mobile et un dispositif portable associé à un utilisateur correspondant à l'espace désigné.

3. Procédé selon la revendication 1, dans lequel la commande du dispositif cible pour fonctionner selon le mode de fonctionnement (103, 204) comprend au moins l'un parmi :
la commande du dispositif cible pour suspendre le fonctionnement lorsque le mode de fonctionnement est un premier mode de fonctionnement correspondant au premier état spatial et que le dispositif cible a été démarré, ou
la commande du dispositif cible pour commuter vers un mode de fonctionnement silencieux lorsque le mode de fonctionnement est le premier mode de fonctionnement et que le dispositif cible a été démarré ; et
la commande du dispositif cible pour démarrer le fonctionnement lorsque le mode de fonctionnement est un second mode de fonctionnement correspondant au second état spatial et que le dispositif cible n'a pas été démarré.

4. Procédé selon la revendication 1, dans lequel l'acquisition de l'état de sommeil de l'utilisateur (202) correspondant à l'espace désigné comprend :
l'acquisition de l'état de sommeil de l'utilisateur par un dispositif portable de l'utilisateur.

5. Appareil (1000) de commande d'un dispositif cible, **caractérisé en ce que** l'appareil comprend :
un processeur (1020), et
un support de stockage lisible par machine stockant des instructions exécutables par machine qui sont exécutées par le processeur (1020) pour réaliser le procédé de commande du dispositif cible selon l'une quelconque des revendications 1 à 4.
